(19) **Europäisches Patentamt / European Patent Office / Office européen des brevets**

(11) **EP 4 769 555 A1**

(12) **EUROPEAN PATENT APPLICATION**
published in accordance with Art. 153(4) EPC

(43) Date of publication:
**01.07.2026  Bulletin 2026/27**

(21) Application number: **25861272.0**

(22) Date of filing: **26.08.2025**

(51) International Patent Classification (IPC):
$H01M\ 4/36^{(2006.01)}$   $H01M\ 4/38^{(2006.01)}$
$H01M\ 4/62^{(2006.01)}$   $H01M\ 4/48^{(2010.01)}$
$H01M\ 4/587^{(2010.01)}$   $H01M\ 4/133^{(2010.01)}$
$H01M\ 4/134^{(2010.01)}$   $H01M\ 10/0525^{(2010.01)}$
$H01M\ 50/204^{(2021.01)}$

(52) Cooperative Patent Classification (CPC):
H01M 4/133; H01M 4/134; H01M 4/36; H01M 4/38;
H01M 4/48; H01M 4/587; H01M 4/62;
H01M 10/0525; H01M 50/204; Y02E 60/10

(86) International application number:
**PCT/KR2025/012952**

(87) International publication number:
**WO 2026/049456 (05.03.2026 Gazette 2026/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 26.08.2024  KR 20240114080
25.08.2025  KR 20250118041

(71) Applicant: **LG ENERGY SOLUTION, LTD.**
**Seoul 07335 (KR)**

(72) Inventors:
• **LEE, Sang Hyun**
  KR)
• **KIM, Donghyuk**
  KR)
• **LEE, Yong Ju**
  KR)

(74) Representative: **Hoffmann Eitle**
**Patent- und Rechtsanwälte PartmbB**
**Arabellastraße 30**
**81925 München (DE)**

(54) **NEGATIVE ELECTRODE ACTIVE MATERIAL, AND NEGATIVE ELECTRODE COMPOSITION, NEGATIVE ELECTRODE AND SECONDARY BATTERY COMPRISING SAME**

(57)  The present specification relates to a negative electrode active material, and a negative electrode and a secondary battery comprising same. According to an embodiment of the present invention, provided is a negative electrode active material comprising a silicon-based active material and a coating layer provided thereon, wherein the silicon-based active material comprises at least one selected from the group consisting of pure Si, SiOx (0<x<2) and Si/C, and the coating layer comprises an inorganic flame retardant.

**Description**

[Technical Field]

This application claims priority to and the benefit of Korean Patent Application No. 10-2024-0114080 filed in the Korean Intellectual Property Office on August 26, 2024, and Korean Patent Application No. 10-2025-0118041 filed in the Korean Intellectual Property Office on August 25, 2025, the entire contents of which are incorporated herein by reference.
The present application relates to a negative electrode active material, a negative electrode composition, a negative electrode, a secondary battery, a battery module, and a battery pack.

[Background Art]

The rapid increase in use of fossil fuel leads to growing demand for alternative and clean energy. In response to the demand, one of the most active research fields is power generation and storage using electrochemical reactions. At present, a secondary battery is a representative example of an electrochemical device that uses such electrochemical energy, and the specified range of use thereof tends to be gradually expanding.
With the increasing technology development and demand for mobile devices, the demand for secondary batteries is also rapidly increasing. Among the secondary batteries, lithium secondary batteries, which exhibit high energy density and voltage, long cycle life, and low self-discharge rate, have been commercialized and widely used. In addition, research is being actively conducted to develop high-density electrodes with higher energy density per unit volume in order to manufacture electrodes for high-capacity lithium secondary batteries.
Typically, a secondary battery includes a positive electrode, a negative electrode, an electrolyte, and a separator. The negative electrode includes a negative electrode active material capable of intercalation and deintercalation of lithium ions from the positive electrode, and silicon-based particles with high discharge capacity may be used as the negative electrode active material.
In particular, in response to the recent increase in demand for high-density energy batteries, research is being actively conducted on a method for increasing capacity by using a silicon-based compound such as Si/C or SiOx having a capacity 10 times or more that of a graphite-based material, as a negative electrode active material. A silicon-based compound, which is a high-capacity material, has the advantage of greater capacity compared to graphite used in the related art, but it has the problem of being susceptible to thermal runaway within the cell under actual operating conditions because its volume expands rapidly during charging.
Accordingly, there is a need for research to develop secondary batteries that provide improved safety while having high capacity.
Therefore, there is a need for research to develop secondary batteries that provide improved safety while having high capacity.

[Detailed Description of the Invention]

[Technical Problem]

The present invention has been made in an effort to provide a negative electrode active material, a negative electrode, and a secondary battery, which apply a silicon-based active material, thereby providing improved safety under operating conditions while having high capacity.

[Technical Solution]

According to an exemplary embodiment of the present invention, there is provided a negative electrode active material including: a silicon-based active material; and a coating layer provided on the silicon-based active material, wherein the silicon-based active material includes one or more selected from the group consisting of Si, $SiO_x$ ($0 < x < 2$), and Si/C, and the coating layer includes an inorganic flame retardant.
Another exemplary embodiment of the present invention provides a negative electrode composition including: the negative electrode active material according to an exemplary embodiment of the present invention; a negative electrode binder; and a negative electrode conductive material.
Still another exemplary embodiment of the present invention provides a negative electrode including: a negative electrode current collector layer; and a negative electrode active material layer formed on one surface or both surfaces of the negative electrode current collector layer, wherein the negative electrode active material layer includes the negative electrode composition according to an exemplary embodiment of the present invention.
Yet another exemplary embodiment of the present invention provides a secondary battery including the negative electrode according to an exemplary embodiment of the present invention.

Still yet another exemplary embodiment of the present invention provides a battery module including the secondary battery according to an exemplary embodiment of the present invention.

A further exemplary embodiment of the present invention provides a battery pack including the secondary battery or battery module according to an exemplary embodiment of the present invention.

[Advantageous Effects]

When the negative electrode active material according to an exemplary embodiment of the present invention is applied to a negative electrode, the life characteristics can be improved while maintaining high capacity.

When the negative electrode active material according to an exemplary embodiment of the present invention is applied to a negative electrode, ignition at high temperatures can be suppressed without deterioration in performance, and thus thermal safety can be improved.

[Best Mode]

Before describing the present invention, some terms are first defined.

As used herein, when it is described that one part "includes", "comprises" or "has" one constituent element, unless otherwise specifically described, this does not mean that another constituent element is excluded, but means that another constituent element may be further included.

As used herein, "p to q" means a range of p or more and q or less.

As used herein, the "specific surface area" is measured by a BET method, and specifically, is calculated from the adsorption amount of nitrogen gas at the temperature of liquid nitrogen (77K) using BELSORP-mini II commercially available from BEL Japan Inc. That is, in the present specification, the BET specific surface area may mean the specific surface area measured by the above measurement method. The BET specific surface area may be measured in accordance with DIN 66131, using nitrogen ($N_2$).

As used herein, "Dn" means a particle size distribution, and refers to a particle size at the n% point in the cumulative distribution of the number of particles according to the particle size. That is, D50 is the particle size (center particle size) at the 50% point in the cumulative distribution of the number of particles according to the particle size, D90 is the particle size at the 90% point in the cumulative distribution of the number of particles according to the particle size, and D10 is the particle size at the 10% point in the cumulative distribution of the number of particles according to the particle size. Meanwhile, the center particle size may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In an exemplary embodiment of the present invention, the particle size or particle diameter may refer to an average diameter or representative diameter of each particle constituting the metal powder.

As used herein, the description "a polymer includes a certain monomer as a monomer unit" means that the monomer participates in a polymerization reaction and is included as a repeating unit in the polymer. As used herein, when it is described that a polymer includes a monomer, this is interpreted to be the same as when the polymer includes a monomer as a monomer unit.

As used herein, the term "polymer" is to be understood in a broad sense to include copolymers, unless specified as a homopolymer.

As used herein, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. As used herein, the molecular weight refers to a weight-average molecular weight unless particularly described otherwise.

Hereinafter, exemplary embodiments of the present invention will be described in detail so that one skilled in the art can readily practice the present invention. However, the present invention may be implemented in various different forms, and is not limited to the following descriptions.

A lithium secondary battery may undergo self-heating within the battery due to external impact or abnormal cell behavior. If the internal temperature of the cell rises due to the self-heating, thermal runaway may occur, and furthermore, the heat generated inside the cell may be transferred to adjacent cells, causing thermal runaway to spread throughout the entire battery.

In particular, the thermal runaway is more problematic for a negative electrode containing a silicon-based negative electrode active material. Silicon-based negative electrodes offer high energy density, but have poor thermal stability, making them more susceptible to cell thermal runaway.

Accordingly, various methods have been discussed to prevent the thermal runaway problem of batteries, such as forming a separate coating layer in addition to a polymer substrate on the separator or attaching a sheet to an outer side of the battery cell to prevent cell-to-cell transfer. However, it has been confirmed that it is difficult to effectively suppress the thermal runaway phenomenon because the methods cannot suppress the abnormal heat generation phenomenon occurring in an electrode unit.

The present inventors have conceived that, by providing a silicon-based active material surface-treated with an inorganic flame retardant as a negative electrode active material, the advantages of an electrode applying a high-capacity silicon-based negative electrode active material can be obtained, while suppressing a temperature increase from within the negative electrode and thereby delaying an increase in internal temperature of the battery to a certain level or higher.

### Negative Electrode Active Material

According to an exemplary embodiment of the present invention, there is provided a negative electrode active material including: a silicon-based active material; and a coating layer provided on the silicon-based active material, wherein the silicon-based active material includes one or more selected from the group consisting of Si, $SiO_x$ ($0 < x < 2$), and Si/C, and the coating layer includes an inorganic flame retardant.

According to an exemplary embodiment of the present invention, there is provided a negative electrode active material including: a silicon-based active material; and a coating layer provided on at least one surface of the silicon-based active material, wherein the silicon-based active material includes one or more selected from the group consisting of Si, $SiO_x$ ($0 < x < 2$), and Si/C, and the coating layer includes an inorganic flame retardant.

According to an exemplary embodiment of the present invention, the negative electrode active material has a structure including a core including a silicon-based active material and a coating layer including an inorganic flame retardant on a surface of the core. That is, the coating layer is provided on at least a portion of the surface of the silicon-based negative electrode active material.

According to an exemplary embodiment of the present invention, the coating layer is provided on the surface of the silicon-based active material.

The negative electrode active material according to the present invention has the feature of having an inorganic flame retardant directly coated on the surface of the silicon-based active material, and thus has the advantage of being able to suppress heat generated by abnormal situations under battery operating conditions from the surface of the negative electrode active material. For example, compared to a form in which an inorganic flame retardant is evenly dispersed in the negative electrode active material layer, the negative electrode active material according to the present invention has the advantage of being able to more effectively suppress heat generated on the surface of the negative electrode active material and to minimize an amount of flame retardant applied to a negative electrode. That is, when applying the negative electrode active material according to an exemplary embodiment of the present invention to a negative electrode, there are advantages in that heat generation inside the cell can be effectively suppressed by applying only a small amount of flame retardant, and the content of the active material can be further increased as the amount of flame retardant is reduced.

The negative electrode active material according to an exemplary embodiment of the present invention includes an inorganic flame retardant that undergoes an endothermic reaction at 100°C to 250°C. For example, the endothermic reaction may occur at 100°C or higher, 150°C or higher, or 180°C or higher.

The inorganic flame retardant selectively undergoes the endothermic reaction only when the internal temperature of the battery abnormally rises due to abnormal heat generation inside the battery, thereby delaying heat generation. That is, since the inorganic flame retardant does not undergo a reaction at the normal operating temperatures of the battery, the internal heat generation of the battery can be effectively suppressed without degradation of battery performance due to the flame retardant under normal operating conditions.

According to an exemplary embodiment of the present invention, the endothermic reaction is a dehydration reaction. The inorganic flame retardant undergoes an endothermic reaction accompanied by dehydration at a specific temperature, and thus has the characteristic that, in addition to suppressing heat through the endothermic reaction, an additional cooling effect can be obtained by the latent heat of water generated by the dehydration reaction.

According to an exemplary embodiment of the present invention, the inorganic flame retardant includes one or more selected from the group consisting of aluminum hydroxide ($Al(OH)_3$), magnesium hydroxide ($Mg(OH)_2$), antimony trioxide ($Sb_2O_3$), and zinc borate.

According to an exemplary embodiment of the present invention, the inorganic flame retardant is aluminum hydroxide ($Al(OH)_3$) or magnesium hydroxide ($Mg(OH)_2$), and preferably aluminum hydroxide ($Al(OH)_3$). The aluminum hydroxide has the characteristics of having a large amount of heat energy that can be absorbed upon reaction, being inexpensive and therefore highly economical, and being a non-toxic substance that does not cause harm to the user even when applied to a battery.

According to an exemplary embodiment of the present invention, an average particle diameter (D50) of the inorganic flame retardant may be 0.05 $\mu$m to 1.5 $\mu$m. For example, the average particle diameter (D50) of the inorganic flame retardant may be 0.05 $\mu$m or more, 0.08 $\mu$m or more, 0.1 $\mu$m or more, 0.5 $\mu$m or more, or 0.6 $\mu$m or more, and 1.5 $\mu$m or less, 1.2 $\mu$m or less, 1 $\mu$m or less, 900 nm or less, or 800 nm or less. When the average particle diameter of the inorganic flame retardant falls within the specified range, a coating layer can be uniformly formed on the surface of the active material.

The average particle diameter of the inorganic flame retardant refers to a volume-average particle diameter (spherical-equivalent particle diameter) obtained by converting each inorganic flame retardant particle into a sphere having the same volume, and this value may be obtained through electron microscope observation. That is, the value is obtained by observing the inorganic flame retardant with an electron microscope, measuring diameters of 200 or more inorganic flame retardant particles within a given field of view, calculating the spherical-equivalent particle diameter of each particle, and determining an average thereof.

According to an exemplary embodiment of the present invention, an average thickness of the coating layer may be 0.02 $\mu$m to 10 $\mu$m. For example, the average thickness of the coating layer may be 0.02 $\mu$m or more, 0.05 $\mu$m or more, 0.08 $\mu$m or more, 0.1 $\mu$m or more, 0.2 $\mu$m or more, 0.5 $\mu$m or more, 0.8 $\mu$m or more, 1 $\mu$m or more, or 1.5 $\mu$m or more, and may be 10 $\mu$m or less, 8 $\mu$m or less, 6 $\mu$m or less, 4 $\mu$m or less, or 3 $\mu$m or less. When the average thickness of the coating layer is within the specified range, the heat resistance of the negative electrode active material can be improved without affecting the behavior of lithium ions under operating conditions. In addition, if the thickness of the coating layer exceeds the upper limit, the size of the entire negative electrode active material may become excessively large, making it difficult to evenly distribute the negative electrode active material within the negative electrode active material layer.

According to an exemplary embodiment of the present invention, the inorganic flame retardant may be included in an amount of 95 parts by weight or more based on 100 parts by weight of the coating layer. For example, the inorganic flame retardant may be included in an amount of 95 parts by weight or more, 96 parts by weight or more, 97 parts by weight or more, or 98 parts by weight or more, and 100 parts by weight or less, 99.5 parts by weight or less, or 99 parts by weight or less, based on 100 parts by weight of the coating layer. When the inorganic flame retardant is included within the specified range, the heat resistance can be improved without lowering the conductivity of the negative electrode active material.

According to an exemplary embodiment of the present invention, the inorganic flame retardant may be included in an amount of 0.1 to 20 parts by weight based on 100 parts by weight of the negative electrode active material. For example, the inorganic flame retardant may be included in an amount of 0.1 parts by weight or more, 0.5 parts by weight or more, or 1 part by weight or more, and 20 parts by weight or less, 15 parts by weight or less, or 10 parts by weight or less, based on 100 parts by weight of the negative electrode active material. That is, the inorganic flame retardant may be included in an amount of 1 to 20 parts by weight, or 1 to 10 parts by weight. When the inorganic flame retardant is included within the specified range, the heat resistance can be improved without lowering the conductivity of the negative electrode active material.

According to an exemplary embodiment of the present invention, the negative electrode active material includes one or more selected from the group consisting of Si, $SiO_x$ (0 < x < 2), and Si/C, as a silicon-based active material.

In an exemplary embodiment of the present invention, the negative electrode active material includes one or more selected from the group consisting of Si and $SiO_x$ (0 < x < 2), as a silicon-based active material.

In an exemplary embodiment of the present invention, the silicon-based active material is Si.

According to an exemplary embodiment of the present invention, the negative electrode active material includes one or more selected from the group consisting of Si, $SiO_x$ (0 < x < 2), and Si/C, as a silicon-based active material, the silicon-based active material includes Si, and the Si is included in an amount of 70 to 100 parts by weight based on 100 parts by weight of the silicon-based active material.

In another exemplary embodiment, the Si is included in an amount of 70 parts by weight or more, 75 parts by weight or more, 80 parts by weight or more, 85 parts by weight or more, or 90 parts by weight or more, based on 100 parts by weight of the silicon-based active material. The Si may be included in an amount of 100 parts by weight or less, less than 100 parts by weight, 99.9 parts by weight or less, 99 parts by weight or less, or 95 parts by weight or less, based on 100 parts by weight of the silicon-based active material.

That is, in an exemplary embodiment of the present invention, the negative electrode active material includes Si as a silicon-based active material, and includes 70 parts by weight or more of Si based on 100 parts by weight of the silicon-based active material.

According to an exemplary embodiment of the present invention, the silicon-based active material may include Si, and the Si may be included in an amount of 100 parts by weight based on 100 parts by weight of the silicon-based active material.

In the present specification, the Si refers to pure silicon (Si) particles, i.e., pure Si. For example, the use of pure silicon (Si) particles as the silicon-based active material may mean that, based on 100 parts by weight of the total negative electrode active material as described above, pure Si particles ($SiO_x$ (x=0)) not bonded to other particles or elements are included within the specified range.

In an exemplary embodiment of the present invention, the silicon-based active material may be formed of silicon-based particles having 100 parts by weight of pure Si based on 100 parts by weight of the negative electrode active material.

In an exemplary embodiment of the present invention, the silicon-based active material may include a metal impurity, and in this case, the impurity is metal that may be generally included in the silicon-based active material, and specifically, may be included in an amount of 0.1 part by weight or less based on 100 parts by weight of the negative electrode active material.

That is, in an exemplary embodiment of the present invention, the silicon-based active material is distinguished from a Si-alloy, and the silicon-based active material according to an exemplary embodiment of the present invention has higher capacity and structural stability than a silicon-based active material in which a Si-alloy is used as a main material.

In another exemplary embodiment, the silicon-based active material includes $SiO_x$ ($0 < x < 2$).

In the case of $SiO_x$, since $SiO_2$ (x=2) does not react with lithium ions and cannot store lithium, it is preferable that x be within the range ($0 < x < 2$). Specifically, in terms of structural stability of the active material, x may be $0.5 \leq x \leq 1.5$.

The $SiO_x$ ($0 < x < 2$) may further include a metal distributed on the surface, in the inside, or both on the surface and in the inside of the $SiO_x$ ($0 < x < 2$) particles. The metal is distributed on the surface and/or in the inside of the silicon-based active material and may be contained in the silicon-based active material in order to reduce the proportion of an irreversible phase (e.g., $SiO_2$) in the silicon-based active material and to increase the efficiency of the active material.

The metal may be at least one selected from the group consisting of Li, Mg, and Al, at least one selected from the group consisting of Li and Mg, or Mg in that Mg can effectively realize an effect of preventing damage to the silicon-based oxide particles and has low reactivity with moisture, thereby further improving the life characteristics of the negative electrode active material.

The metal may be included in the silicon-based active material in an amount of 0.1 wt% to 25 wt%, or 3 wt% to 15 wt%, which is preferable in that the efficiency of the active material can be increased without reducing the capacity.

In an exemplary embodiment of the present invention, an average particle diameter (D50) of the silicon-based active material may be 1 $\mu$m or more. Additionally, the average particle diameter of the silicon-based active material may be 15 $\mu$m or less. For example, the average particle diameter (D50) of the silicon-based active material may be 1 $\mu$m or more, greater than 1 $\mu$m, 2 $\mu$m or more, 3 $\mu$m or more, or 4 $\mu$m or more, and 15 $\mu$m or less, less than 15 $\mu$m, 14 $\mu$m or less, 13 $\mu$m or less, 10 $\mu$m or less, or 8 $\mu$m or less.

In an exemplary embodiment of the present invention, the coating layer is formed on the surface of the silicon-based active material. That is, in an exemplary embodiment of the present invention, when a total area of the silicon-based active material is 100%, an area of the coating layer is 50% or more. For example, the area of the coating layer may be 50% or more, 60% or more, 70% or more, or 80% or more, and 100% or less, less than 100%, 99% or less, 95% or less, or 90% or less.

In an exemplary embodiment of the present invention, when the average particle diameter (D50) of the silicon-based active material is denoted as A and the average particle diameter (D50) of the inorganic flame retardant is denoted as B, the following Equation 1 is satisfied.

$$[Equation\ 1]$$

$$3 \leq A/B \leq 25$$

In an exemplary embodiment of the present invention, Equation 1 is 3 to 25. For example, Equation 1 may be 3 or more, 4 or more, 5 or more, 6 or more, or 7 or more, and 25 or less, 20 or less, or 15 or less. When Equation 1 falls within the specified range, the size between the silicon-based active material and the inorganic flame retardant is appropriately controlled, so that an inorganic flame retardant coating layer can be uniformly and thinly formed on the silicon-based active material.

In Equation 1, the ranges of A and B may be based on the average particle diameter (D50) of the silicon-based active material and the average particle diameter (D50) of the inorganic flame retardant.

In an exemplary embodiment of the present invention, a crystal grain size of the silicon-based active material may be 600 nm or less.

In another exemplary embodiment, the crystal grain size of the silicon-based active material may be 600 nm or less, 500 nm or less, 400 nm or less, 300 nm or less, 200 nm or less, 130 nm or less, 110 nm or less, 100 nm or less, 95 nm or less, or 91 nm or less. The crystal grain size of the above silicon-based active material may range from 10 nm or more, or 15 nm or more.

The silicon-based active material has the crystal grain size described above, and the crystal grain size of the silicon-based active material may be controlled by changing a process condition in a manufacturing process. In this case, when the specified range is satisfied, the crystal grain boundaries are widely distributed, and thus, the lithium ions can be uniformly intercalated during intercalating of lithium ions, thereby reducing the stress applied during intercalating of lithium ions into the silicon particles, and accordingly, mitigating breakage of the particles. As a result, characteristics capable of improving the life stability of the negative electrode are obtained. If the crystal grain size exceeds the specified range, the crystal grain boundaries within the particles are narrowly distributed, and in this case, lithium ions are non-uniformly intercalated into the particles, leading to large stress during the intercalating of ions, and accordingly, breakage of particles.

In an exemplary embodiment of the present invention, the silicon-based active material may include a crystal structure having a crystal grain distribution of 1 nm or more and 600 nm or less, and an area ratio of the crystal structure to a total area of the silicon-based active material may be 5% or less.

In another exemplary embodiment, the area ratio of the crystal structure to the total area of the silicon-based active material may be 5% or less, or 3% or less, and 0.1% or more.

That is, the silicon-based active material according to an exemplary embodiment of the present invention has a crystal grain size of 600 nm or less, such that the size of each crystal structure is formed small and the area ratio may be satisfied. Accordingly, the distribution of the crystal grain boundaries may be widened, and accordingly, the above-described effects may be exhibited.

The silicon-based active material according to an exemplary embodiment of the present invention has a crystal grain size of 200 nm or less, such that the size of each crystal structure is formed small and the area ratio may be satisfied. Accordingly, the distribution of the crystal grain boundaries may be widened, and accordingly, the above-described effects may be exhibited.

In an exemplary embodiment of the present invention, the number of crystal structures included in the silicon-based active material may be 20 or more.

In another exemplary embodiment, the number of crystal structures included in the silicon-based active material may fall within a range of 20 or more, 30 or more, or 35 or more, and 60 or less or 50 or less.

That is, as described above, when the crystal grain size of the silicon-based active material falls within the specified range and the number of crystal structures falls within the specified range, the silicon-based active material itself has strength within an appropriate range. Therefore, when such a silicon-based active material is included in an electrode, flexibility can be imparted, and volume expansion can be effectively suppressed.

In the present invention, the crystal grain refers to a crystal particle in a metal or material, which is a collection of microscopically irregular shapes, and the crystal grain size may refer to a diameter of the observed crystal grain particle. That is, in the present invention, the crystal grain size refers to a size of a domain that shares the same crystal orientation within a particle, and is a different concept from the particle size or particle diameter that represents a size of a material.

In an exemplary embodiment of the present invention, the crystal grain size may be calculated as an FWHM (Full Width at Half Maximum) value through XRD analysis. The remaining values except L may be measured through XRD analysis of the silicon-based active material, and the crystal grain size may be determined through the Debey-Scherrer equation showing that the FWHM and the crystal grain size are in inverse ratio. The Debey-Scherrer equation is as shown in Equation 1-1 below.

[Equation 1-1]

$$FWHM = K\lambda / L\cos\theta$$

In Equation 1-1,
L is the crystal grain size, K is a constant, $\theta$ is a Bragg angle, and $\lambda$ refers to a wavelength of X-ray.

In addition, the shapes of the crystal grains are diverse and can be measured in three dimensions. In general, the size of the crystal grain can be measured by a generally used circle method or diameter measurement method, but no such limitation is intended.

In the diameter measurement method, the size of the crystal grain can be measured by drawing 5 to 10 parallel lines each having a length of L mm on a micrograph of a target particle, counting the number of crystal grains z on each line, and averaging them. In this case, only crystal grains that are wholly included within the line are counted, and crystal grains that are partially put on (laid across) the line are excluded. When the number of lines is denoted as P and the magnification is denoted as V, the average particle diameter may be calculated by Equation 1-2 below.

[Equation 1-2]

$$Dm = (L*P*10^3)/(zV) \; (\mu m)$$

In addition, the circle method is a method in which a circle with a predetermined diameter is drawn on a micrograph of a target particle, and then an average area of crystal grains is calculated by the number of crystal grains in the circle and the number of crystal grains laid across the boundary line, and the average area can be calculated by Equation 1-3 below.

$$[\text{Equation 1-3}]$$

$$Fm = (Fk * 10^6) / ((0.67n + z)V^2) \quad (\mu m^2)$$

In Equation 1-3, Fm is an average particle area, Fk is a measurement area on the photograph, z is the number of particles within a circle, n is the number of particles laid across the circle, and V is a magnification of a microscope.

In an exemplary embodiment of the present invention, the negative electrode active material including the silicon-based active material and the inorganic flame retardant coating layer provided on the silicon-based active material may have a specific surface area of 0.5 $m^2/g$ to 5 $m^2/g$.

In another exemplary embodiment, the negative electrode active material may have a specific surface area of 0.5 $m^2/g$ or more, 1 $m^2/g$ or more, 1.25 $m^2/g$ or more, 1.5 $m^2/g$ or more, or 2 $m^2/g$ or more. The silicon-based active material may have a specific surface area of 5 $m^2/g$ or less, 5.5 $m^2/g$ or less, or 4.5 $m^2/g$ or less. The specific surface area may be measured in accordance with DIN 66131 (using nitrogen).

The negative electrode active material has the specific surface area described above, and the size of the specific surface area of the silicon-based active material may be controlled by changing the process conditions in the manufacturing process and the growth conditions of the silicon-based active material. That is, when a silicon-based active material is manufactured using the manufacturing method according to the present application, the negative electrode active material has a larger specific surface area due to a rough surface compared to particles having the same particle size. In this case, by satisfying the specified range, the bonding strength with a binder is increased, whereby cracks in the electrode due to repeated charge and discharge cycles can be alleviated.

In addition, the lithium ions can be uniformly intercalated during intercalation of lithium ions, resulting in reduction in stress applied during intercalation of lithium ions into the silicon particles, and accordingly, reduction in breakage of the particles.

As a result, characteristics capable of improving the life stability of the negative electrode are obtained. If the surface area is less than the specified range, the surface is formed smooth even with the same particle size, resulting in a decrease in the bonding strength with the binder, and cracks of the electrode. In this case, lithium ions are non-uniformly intercalated into the particles, resulting in an increase in the stress due to the ion intercalation, and breakage of particles.

In an exemplary embodiment of the present invention, the negative electrode active material satisfies the range of the following Equation 2-1.

$$[\text{Equation 2-1}]$$

$$X1/Y1 \leq 0.960$$

In Equation 2-1,

X1 refers to an actual area of the negative electrode active material, and
Y1 refers to an area of a spherical particle having the same circumference as that of the negative electrode active material.

The measurement for Equation 2-1 may be performed using a particle shape analyzer. Specifically, the negative electrode active material according to an exemplary embodiment of the present invention may be dispersed on a glass plate through air spraying, and then a shape of 10,000 negative electrode active material particles in a photograph obtained by capturing a shadow image of the dispersed particles may be measured. In this case, Equation 2-1 represents a value expressing an average of 10,000 particles. From the image, Equation 2-1 according to the present invention may be measured, and Equation 2-1 may be expressed as the sphericity (circularity) of the negative electrode active material. The sphericity may also be expressed by [4n*actual area of negative electrode active material/(circumference)$^2$].

In an exemplary embodiment of the present invention, the sphericity of the negative electrode active material may be, for example, 0.960 or less, or 0.957 or less. The sphericity of the negative electrode active material may be 0.8 or more, 0.9 or more, 0.93 or more, 0.94 or more, or 0.941 or more.

In an exemplary embodiment of the present invention, the negative electrode active material satisfies the range of the following Equation 2-2.

[Equation 2-2]

$$X2/Y2 \leq 0.996$$

In Equation 2-2,

Y2 refers to an actual circumference of the negative electrode active material, and
X2 refers to a circumference of a circumscribed figure of the negative electrode active material.

The measurement for Equation 2-2 may be performed using a particle shape analyzer. Specifically, the negative electrode active material according to an exemplary embodiment of the present invention may be dispersed on a glass plate through air spraying, and then a shape of 10,000 negative electrode active material particles in a photograph obtained by capturing a shadow image of the dispersed particles may be measured. In this case, Equation 2-2 represents a value expressing an average of 10,000 particles. From the image, Equation 2-2 according to the present invention may be measured, and Equation 2-2 may be expressed as the convexity of the negative electrode active material.

In an exemplary embodiment of the present invention, the range of X2/Y2 $\leq$ 0.996, or X2/Y2 $\leq$ 0.995 may be satisfied, and the range of 0.8 $\leq$ X2/Y2, 0.9 $\leq$ X2/Y2, 0.95 $\leq$ X2/Y2, or 0.98 $\leq$ X2/Y2 may be satisfied.

The smaller the value of Equation 2-1 or Equation 2-2, the greater the roughness of the negative electrode active material. By using a negative electrode active material satisfying the specified range, the bonding strength with a binder is increased, whereby cracks in the electrode due to repeated charge and discharge cycles can be alleviated.

In an exemplary embodiment of the present invention, the negative electrode active material has a particle size distribution of 0.01 $\mu$m or more and 30 $\mu$m or less.

The fact that the negative electrode active material includes negative electrode active material particles having a particle size distribution of 0.01 $\mu$m or more and 30 $\mu$m or less means that the negative electrode active material includes a plurality of individual negative electrode active material particles having particle sizes within the specified range, and in this case, the number of negative electrode active material particles included is not limited.

The particle size may be expressed by its diameter when the particle is spherical. Even if the particle has a shape other than a spherical shape, the particle size may be measured in comparison to the spherical case. In general, the particle sizes of individual particles may be measured by a method commonly adopted in the art.

## Negative Electrode Composition

An exemplary embodiment of the present invention provides a negative electrode composition including the negative electrode active material according to an exemplary embodiment of the present invention; a negative electrode binder; and a negative electrode conductive material.

An exemplary embodiment of the present invention provides a negative electrode composition including the negative electrode active material according to an exemplary embodiment of the present invention; a negative electrode binder; and a negative electrode conductive material, and further including a carbon-based active material as a second negative electrode active material.

That is, an exemplary embodiment of the present invention provides a negative electrode composition including the negative electrode active material according to an exemplary embodiment of the present invention as a first negative electrode active material; a carbon-based active material as a second negative electrode active material; a negative electrode binder; and a negative electrode conductive material.

In an exemplary embodiment of the present invention, the carbon-based active material may include one or more selected from the group consisting of natural graphite and artificial graphite. Specifically, the carbon-based active material may be natural graphite, artificial graphite, or a mixture of natural graphite and artificial graphite.

The negative electrode composition according to an exemplary embodiment of the present invention further includes a carbon-based active material as a second negative electrode active material, in addition to the negative electrode active material according to an exemplary embodiment of the present invention, so that the advantage of high capacity of the first negative electrode active material can be taken while the volume expansion problem originating from the silicon-based active material is improved, and high safety and excellent output originating from the second active material are exhibited.

Artificial graphite is generally manufactured by carbonizing a raw material, such as coal tar, coal tar pitch or petroleum-based heavy oil, at 2,500°C or higher. After the graphitization, artificial graphite is subjected to particle size adjustment, such as pulverization and secondary particle formation, and then is used as a negative electrode active material. In the case of artificial graphite, the crystals are randomly distributed in the particles, the sphericity is lower than that of natural graphite, and the shape is slightly sharp.

Additionally, the artificial graphite may have a particle diameter of 5 to 30 $\mu$m, preferably 10 to 25 $\mu$m.

The natural graphite is generally in the form of plate-like agglomerates before being processed, and the plate-like particles are manufactured in the form of a sphere having a smooth surface through post-treatment processing such as particle pulverization and re-assembly process for use as an active material for manufacture of an electrode.

Additionally, the natural graphite may have a particle diameter of 5 to 30 μm, or 10 to 25 μm.

When the carbon-based active material is a mixture of artificial graphite and natural graphite, a weight ratio of the artificial graphite and the natural graphite may be 9.99:0.01 to 0.01:9.99, or 9.7:0.3 to 7:3. Excellent output can be exhibited when the weight ratio range is satisfied.

In an exemplary embodiment of the present invention, the first negative electrode active material may be included in an amount of 1 to 20 parts by weight based on a total 100 parts by weight of the first and second negative electrode active materials. The total 100 parts by weight of the first and second negative electrode active materials means that the sum of the first negative electrode active material and the second negative electrode active material is 100 parts by weight. For example, the first negative electrode active material may be included in an amount of 1 part by weight or more, 2 parts by weight or more, 3 parts by weight or more, 4 parts by weight or more, or 5 parts by weight or more, and 20 parts by weight or less, or 18 parts by weight or less, based on the total 100 parts by weight of the first and second negative electrode active materials.

In an exemplary embodiment of the present invention, the second negative electrode active material may be included in an amount of 80 to 99 parts by weight based on 100 parts by weight of the first and second negative electrode active materials. 100 parts by weight of the first and second negative electrode active materials refers to a sum of the first negative electrode active material and the second negative electrode active material. For example, the second negative electrode active material may be included in an amount of 80 parts by weight or more, 83 parts by weight or more, or 85 parts by weight or more, and 99 parts by weight or less, 95 parts by weight or less, or 90 parts by weight or less, based on 100 parts by weight of the first and second negative electrode active materials.

In the negative electrode composition according to an exemplary embodiment of the present invention, the negative electrode binder and the negative electrode conductive material will be described below.

According to an exemplary embodiment of the present invention, the negative electrode composition is provided which includes 60 parts by weight or more of the negative electrode active material based on 100 parts by weight of the negative electrode composition.

In another exemplary embodiment, the negative electrode active material may be included in an amount of 60 parts by weight or more, 65 parts by weight or more, or 70 parts by weight or more, and 97 parts by weight or less, 95 parts by weight or less, or 90 parts by weight or less, based on 100 parts by weight of the negative electrode composition.

In an exemplary embodiment of the present invention, the conductive material may include one or more selected from the group consisting of a point-like conductive material, a planar conductive material, and a linear conductive material.

In an exemplary embodiment of the present invention, the point-like conductive material refers to a spherical or point-like conductive material that may be used to improve conductivity of the negative electrode and has conductivity without causing a chemical change. Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present invention, the point-like conductive material may have a BET specific surface area of 40 m$^2$/g or more and 70 m$^2$/g or less, 45 m$^2$/g or more and 65 m$^2$/g or less, or 50 m$^2$/g or more and 60 m$^2$/g or less.

In an exemplary embodiment of the present invention, a content of the functional group (volatile matter) of the point-like conductive material may fall within a range of 0.01% or more and 1% or less, preferably 0.01% or more and 0.3% or less, and more preferably 0.01% or more and 0.1% or less.

In particular, when the content of the functional group of the point-like conductive material falls within the specified range, a functional group is present on a surface of the point-like conductive material, so that the point-like conductive material can be smoothly dispersed in a solvent when water is used as the solvent.

In an exemplary embodiment of the present invention, the conductive material may include a planar conductive material.

The planar conductive material can serve to improve conductivity by increasing surface contact between silicon particles in the negative electrode, and at the same time, to suppress the disconnection of the conductive path due to the volume expansion, and may be expressed as a plate-like conductive material or a bulk-type conductive material.

In an exemplary embodiment of the present invention, the planar conductive material may include at least one selected from the group consisting of plate-like graphite, graphene, graphene oxide, and graphite flake, and preferably may be plate-like graphite.

In an exemplary embodiment of the present invention, an average particle diameter (D50) of the planar conductive material may be 2 $\mu$m to 7 $\mu$m, specifically 3 $\mu$m to 6 $\mu$m, and more specifically 4 $\mu$m to 5 $\mu$m. When the specified range is satisfied, the sufficient particle size results in easy dispersion without causing an excessive increase in viscosity of the negative electrode slurry. Therefore, the dispersion effect is excellent when performing dispersion using the same equipment and time.

In an exemplary embodiment of the present invention, for the planar conductive material, a planar conductive material with a high specific surface area having a high BET specific surface area or a planar conductive material with a low specific surface area may be used.

In an exemplary embodiment of the present invention, for the planar conductive material, a planar conductive material with a high specific surface area or a planar conductive material with a low specific surface area may be used without limitation. However, in particular, the planar conductive material according to an exemplary embodiment of the present invention may be affected to some extent in the electrode performance by the dispersion effect, so that a planar conductive material with a low specific surface area, which does not cause a problem in dispersion, is used particularly preferably.

In an exemplary embodiment of the present invention, the planar conductive material may have a BET specific surface area of 5 $m^2$/g or greater.

In another exemplary embodiment, the planar conductive material may have a BET specific surface area of 5 $m^2$/g or more and 500 $m^2$/g or less, preferably 5 $m^2$/g or more and 300 $m^2$/g or less, and more preferably 5 $m^2$/g or more and 250 $m^2$/g or less.

In another exemplary embodiment, the planar conductive material is a planar conductive material with a high specific surface area, and the BET specific surface area may fall within a range of 50 $m^2$/g or more and 500 $m^2$/g or less, preferably 80 $m^2$/g or more and 300 $m^2$/g or less, and more preferably 100 $m^2$/g or more and 300 $m^2$/g or less.

In another exemplary embodiment, the planar conductive material is a planar conductive material with a low specific surface area, and the BET specific surface area may fall within a range of 5 $m^2$/g or more and 40 $m^2$/g or less, preferably 5 $m^2$/g or more and 30 $m^2$/g or less, and more preferably 5 $m^2$/g or more and 25 $m^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an $sp^2$ bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present invention, the linear conductive material may include an SWCNT or an MWCNT.

In an exemplary embodiment of the present invention, the negative electrode composition is provided in which the negative electrode conductive material is present in an amount of 0.01 parts by weight or more and 20 parts by weight or less based on 100 parts by weight of the negative electrode composition. For example, the negative electrode conductive material may be included in an amount of 0.01 parts by weight or more, 0.1 parts by weight or more, or 0.5 parts by weight or more, and 20 parts by weight or less, 15 parts by weight or less, 10 parts by weight or less, or 5 parts by weight or less, based on 100 parts by weight of the negative electrode composition.

The negative electrode conductive material according to an exemplary embodiment of the present invention has a completely different composition from that of a positive electrode conductive material applied to the positive electrode. That is, the negative electrode conductive material according to an exemplary embodiment of the present invention serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to an exemplary embodiment of the present invention is applied to a silicon-based active material and has a completely different composition from that of a conductive material applied to a negative electrode composition including only a graphite-based active material. That is, the conductive material used for a negative electrode composition having only a graphite-based active material simply has smaller particles compared to the active material, and thus has the characteristics of enhancing output characteristics and imparting partial conductivity, and the composition and role thereof are completely different from those of the negative electrode conductive material applied together with a silicon-based active material as in the present invention.

In an exemplary embodiment of the present invention, the negative electrode binder may include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer (EPDM), sulfonated EPDM, styrene butadiene rubber (SBR), fluoro rubber, polyacrylic acid, polyacrylamide (PAM), and materials in which hydrogen thereof is substituted with Li, Na, Ca, or the like, and may also include various copolymers thereof.

The negative electrode binder according to an exemplary embodiment of the present invention serves to hold the active material and the conductive material in order to prevent distortion and structural deformation of the negative electrode structure during the volume expansion and relaxation of the silicon-based active material. When the above-mentioned role is satisfied, all general binders can be applied, specifically, an aqueous binder can be used, and more specifically, a PAM-based binder, which is a one-component aqueous binder, can be used.

In an exemplary embodiment of the present invention, a negative electrode slurry is provided in which the negative electrode binder includes an aqueous binder, and the negative electrode binder is included in an amount of 5 parts by weight or more and 12 parts by weight or less based on 100 parts by weight of the negative electrode composition.

In another exemplary embodiment, the negative electrode binder may be included in an amount of 5 parts by weight or more and 12 parts by weight or less, 7 parts by weight or more and 11 parts by weight or less, or 8 parts by weight or more and 11 parts by weight or less, based on 100 parts by weight of the negative electrode composition.

In a negative electrode for a lithium secondary battery according to an exemplary embodiment of the present invention, the silicon-based active material is used in the parts by weight described above to maximize capacity characteristics, and, compared with the case of the related art where a carbon-based active material is used as a main active material, volume expansion during charging and discharging becomes greater. Accordingly, the negative electrode includes the negative electrode binder in the content described above, and thus, has a feature of efficiently controlling the volume expansion due to charging and discharging of the silicon-based active material having high rigidity.

**Negative Electrode**

According to an exemplary embodiment of the present invention, a negative electrode is provided which includes a negative electrode current collector layer and a negative electrode active material layer including the negative electrode active material formed on one surface or both surfaces of the negative electrode current collector layer.

In an exemplary embodiment of the present invention, the negative electrode for a secondary battery may be formed by applying and drying the negative electrode slurry on one surface or both surfaces of the negative electrode current collector layer.

In an exemplary embodiment of the present invention, a solid content of the negative electrode slurry may satisfy a range of 5% or more and 55% or less.

In another exemplary embodiment, the solid content of the negative electrode slurry may fall within a range of 5% or more and 55% or less, 7% or more and 35% or less, or 10% or more and 30% or less.

The solid content of the negative electrode slurry may refer to a content of the negative electrode active material, conductive material, and binder excluding the solvent in the negative electrode slurry, and may refer to a sum of the negative electrode active material, the conductive material, and the binder based on 100 parts by weight of the negative electrode slurry.

When the solid content of the negative electrode slurry falls within the specified range, the viscosity becomes appropriate during formation of the negative electrode active material layer, which minimizes particle agglomeration and allows the negative electrode active material layer to be efficiently formed.

In an exemplary embodiment of the present invention, the slurry solvent may be used without limitation as long as it is used in the art, and specifically, water, acetone or NMP may be used.

In an exemplary embodiment of the present invention, the negative electrode current collector layer generally has a thickness of 1 $\mu$m to 100 $\mu$m. The negative electrode current collector layer is not particularly limited as long as it has high conductivity without causing a chemical change in the battery, and for example, copper, stainless steel, aluminum, nickel, titanium, calcined carbon, copper or stainless steel surface-treated with carbon, nickel, titanium, silver, or the like, an aluminum-cadmium alloy, and the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present invention, there is provided the negative electrode for a secondary battery in which a thickness of the negative electrode current collector layer is 1 $\mu$m or more and 100 $\mu$m or less, and a thickness of the negative electrode active material layer is 10 $\mu$m or more and 500 $\mu$m or less.

In the present invention, the thickness of the negative electrode active material layer may refer to the thickness of a single negative electrode active material layer when formed on one surface of the negative electrode current collector layer.

However, the thickness may be variously modified depending on a type and a use of negative electrode used, and is not limited thereto.

In an exemplary embodiment of the present invention, there is provided the negative electrode for a secondary battery in which a porosity of the negative electrode active material layer is 40% or more and 60% or less.

In another exemplary embodiment, the porosity of the negative electrode active material layer may fall within a range of 40% or more and 60% or less, 45% or more and 60% or less, or 50% or more and 55% or less.

## Secondary Battery

According to an exemplary embodiment of the present invention, there is provided a secondary battery including a positive electrode, the negative electrode according to an exemplary embodiment of the present invention, a separator provided between the positive electrode and the negative electrode, and an electrolyte.

The secondary battery according to an exemplary embodiment of the present invention may particularly include the negative electrode for a secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, calcined carbon, aluminum or stainless steel each surface-treated with carbon, nickel, titanium, silver, or the like, or the like may be used. In addition, the positive electrode current collector may typically have a thickness of 3 $\mu$m to 500 $\mu$m, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide represented by chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$, and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.6$); a lithium manganese composite oxide represented by chemical formula $LiMn_{2-c3}M_{c3}O_2$ (where M is at least one selected from the group consisting of Co, Ni, Fe, Cr, Zn, and Ta, and satisfies $0.01 \leq c3 \leq 0.6$) or $Li_2Mn_3MO_8$ (where M is at least one selected from the group consisting of Fe, Co, Ni, Cu, and Zn); $LiMn_2O_4$ in which a part of Li of the chemical formula is substituted with an alkaline earth metal ion, or the like, but is not limited thereto. The positive electrode may be Li metal.

In an exemplary embodiment of the present invention, the positive electrode active material may include a lithium composite transition metal compound including nickel (Ni), cobalt (Co), and manganese (Mn), the lithium composite transition metal compound may include single particles or secondary particles, and an average particle diameter (D50) of the single particles may be 1 $\mu$m or more.

For example, the average particle diameter (D50) of the single particles may be 1 $\mu$m or greater and 12 $\mu$m or less, 1 $\mu$m or greater and 8 $\mu$m or less, 1 $\mu$m or greater and 6 $\mu$m or less, greater than 1 $\mu$m and 12 $\mu$m or less, greater than 1 $\mu$m and 8 $\mu$m or less, or greater than 1 $\mu$m and 6 $\mu$m or less.

Even when the single particles are formed with a small average particle diameter (D50) of 1 $\mu$m or greater and 12 $\mu$m or less, the particle strength may be excellent. For example, the single particle may have a particle strength of 100 to 300 MPa when roll-pressing with a force of 650 kgf/cm$^2$. Accordingly, even when the single particles are roll-pressed with a strong force of 650 kgf/cm$^2$, the increase in micro-particles in an electrode due to particle breakage is alleviated, which improves the life characteristics of the battery.

The single particles may be manufactured by mixing and calcining a transition metal precursor and a lithium source material. The secondary particles may be manufactured by a method different from that of the single particles, and the composition thereof may be the same as or different from that of the single particles.

The method of forming the single particles is not particularly limited, but generally the single particles may be formed by over-calcination at an increased calcination temperature, or may be manufactured by using additives such as grain growth promoters that help over-calcination, or by changing a starting material.

For example, the calcination is performed at a temperature at which single particles can be formed. To this end, the calcination should be performed at a temperature higher than a temperature during the manufacture of the secondary particles. For example, when the composition of the precursor is the same, the calcination should be performed at a temperature about 30°C to 100°C higher than a temperature during the manufacture of the secondary particles. The calcination temperature for the formation of single particles may vary depending on the metal composition in the precursor. For example, when it is desired to form a high-content nickel (High-Ni) NCM-based lithium composite transition metal oxide having a nickel (Ni) content of 80 mol% or more into single particles, the calcination temperature may be about 700°C to 1000°C, preferably about 800°C to 950°C. When the calcination temperature falls within the specified range, a positive electrode active material including single particles having excellent electrochemical properties can be manufactured. If the calcination temperature is below 790°C, a positive electrode active material including a lithium composite transition metal compound in the form of secondary particles may be manufactured, and if the calcination temperature exceeds 950°C, excessive calcination occurs and a layered crystal structure is not properly formed, so that the electrochemical properties may be deteriorated.

As used herein, the single particle is a term used to distinguish the same from typical secondary particles resulting from agglomeration of tens to hundreds of primary particles, and is a concept including a single particle consisting of one primary particle and a quasi-single particle form that is an agglomerate of 30 or less primary particles.

Specifically, in the present invention, the single particle may be a single particle consisting of one primary particle or a quasi-single particle form that is an agglomerate of 30 or less primary particles, and the secondary particle may be an agglomerate form of hundreds of primary particles.

In an exemplary embodiment of the present invention, the lithium composite transition metal compound, which is the positive electrode active material, further includes secondary particles, and the average particle diameter (D50) of the single particles is smaller than an average particle diameter (D50) of the secondary particles.

In the present invention, the single particle may be a single particle consisting of one primary particle or a quasi-single particle form that is an agglomerate of 30 or less primary particles, and the secondary particle may be an agglomerate form of hundreds of primary particles.

The above-described lithium composite transition metal compound may further include secondary particles. The secondary particle refers to a form formed by agglomeration of primary particles, and may be distinguished from the concept of a single particle including one primary particle, one single particle and a quasi-single particle form, which is an agglomerate of 30 or less primary particles.

The secondary particle may have a particle diameter (D50) of 1 to 20 $\mu$m, 2 to 17 $\mu$m, and preferably 3 to 15 $\mu$m. The specific surface area (BET) of the secondary particles may be 0.05 m$^2$/g to 10 m$^2$/g, preferably 0.1 m$^2$/g to 1 m$^2$/ g, and more preferably 0.3 m$^2$/g to 0.8 m$^2$/g.

In a further exemplary embodiment of the present invention, the secondary particle is an agglomerate of primary particles, and the average particle diameter (D50) of the primary particles is 0.5 $\mu$m to 3 $\mu$m. Specifically, the secondary particle may be in an agglomerate form of hundreds of primary particles, and the average particle diameter (D50) of the primary particles may be 0.6 to 2.8 $\mu$m, 0.8 to 2.5 $\mu$m, or 0.8 to 1.5 um.

When the average particle diameter (D50) of the primary particles falls within the specified range, a single-particle positive electrode active material having excellent electrochemical properties can be formed. If the average particle diameter (D50) of the primary particles is too small, the number of agglomerates of primary particles forming lithium nickel-based oxide particles increases, reducing the effect of suppressing particle breakage during roll-pressing, and if the average particle diameter (D50) of the primary particles is too large, a lithium diffusion path inside the primary particles may be lengthened, increasing a resistance and degrading an output characteristic.

According to a further exemplary embodiment of the present invention, the average particle diameter (D50) of the single particles is smaller than the average particle diameter (D50) of the secondary particles. As a result, the single particles may have excellent particle strength even if they are formed with a small particle diameter, and accordingly, the increase in micro-particles in an electrode due to particle breakage is alleviated, which can improve the life characteristics of the battery.

In an exemplary embodiment of the present invention, the average particle diameter (D50) of the single particles is 1 $\mu$m to 18 $\mu$m smaller than the average particle diameter (D50) of the secondary particles.

For example, the average particle diameter (D50) of the single particles may be 1 to 16 $\mu$m smaller, 1.5 to 15 $\mu$m smaller, or 2 to 14 $\mu$m smaller than the average particle diameter (D50) of the secondary particles.

When the average particle diameter (D50) of the single particles is smaller than the average particle diameter (D50) of the secondary particles, for example, when the specified range is satisfied, the single particles may have excellent particle strength even if they are formed with a small particle diameter, and accordingly, the increase in micro-particles in an electrode due to particle breakage is alleviated, which can improve the life characteristics and energy density of the battery.

According to a further exemplary embodiment of the present invention, the single particles are included in an amount of 15 to 100 parts by weight based on 100 parts by weight of the positive electrode active material. The single particles may be included in an amount of 20 parts by weight to 100 parts by weight, or 30 parts by weight to 100 parts by weight based on 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more based on 100 parts by weight of the positive electrode active material. The single particles may be included in an amount of 100 parts by weight or less based on 100 parts by weight of the positive electrode active material.

When the single particles are included within the specified range, excellent battery characteristics may be exhibited in combination with the negative electrode material described above. In particular, when the single particles are included in an amount of 15 parts by weight or more, the increase in micro-particles in an electrode due to particle breakage during the roll pressing after fabrication of an electrode is alleviated, which can improve the life characteristics of the battery.

In an exemplary embodiment of the present invention, the lithium composite transition metal compound may further include secondary particles, and the amount of the secondary particles may be 85 parts by weight or less based on 100 parts by weight of the positive electrode active material. The secondary particles may be included in an amount of 80 parts by weight or less, 75 parts by weight or less, or 70 parts by weight or less based on 100 parts by weight of the positive electrode active material. The secondary particles may be included in an amount of 0 part by weight or more based on 100 parts by weight of the positive electrode active material.

When the specified range is satisfied, the above-described effects due to the existence of the single particles in the positive electrode active material can be maximized. In the case in which the positive electrode active material of the secondary particles is included, the components thereof may be the same as or different from those exemplified in the single-particle positive electrode active material described above, and may mean an agglomerate form of single particles.

In an exemplary embodiment of the present invention, the positive electrode active material may be included in an amount of 80 parts by weight or more and 99.9 parts by weight or less, preferably 90 parts by weight or more and 99.9 parts by weight or less, more preferably 95 parts by weight or more and 99.9 parts by weight or less, and still more preferably 98 parts by weight or more and 99.9 parts by weight or less, in 100 parts by weight of the positive electrode active material layer.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidenefluoride (PVDF), polyvinylidenefluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a migration pathway for lithium ions, in which any separator may be used as the separator without particular limitation as long as it is typically used in a secondary battery, and particularly, a separator having high moisture-retention ability for an electrolyte as well as a low resistance to the migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

Examples of the non-aqueous organic solvent include aprotic organic solvents such as N-methyl-2-pyrrolidinone, fluoroethylene carbonate, propylene carbonate, ethylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, and ethyl propionate.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)2N^-$, $CF_3CF_2(CF_3)2CO^-$, $(CF_3SO_2)2CH^-$, $(SF_5)$ $3C^-$, $(CF_3SO_2)3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethylphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

**Battery Module and Battery Pack**

An exemplary embodiment of the present invention provides a battery module including the secondary battery according to an exemplary embodiment of the present invention.

An exemplary embodiment of the present invention provides a battery pack including the secondary battery according to an exemplary embodiment of the present invention.

An exemplary embodiment of the present invention provides a battery pack including the battery module according to an exemplary embodiment of the present invention.

An exemplary embodiment of the present invention provides a battery module including the secondary battery as a unit cell, and a battery pack including the secondary battery or the battery module. Since the battery module and the battery pack include the secondary battery having high capacity and high rate and cycle characteristics, the battery module and the battery pack may be used as a power source of a medium to large sized device selected from the group consisting of an electric vehicle, a hybrid electric vehicle, a plug-in hybrid electric vehicle, and a power storage system.

Although the present invention has been described with reference to exemplary embodiments thereof, those skilled in the art will be able to make various applications and modifications within the scope of the present invention based on the above description.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Preparation Examples>**

**Example 1**

1) Preparation of Negative Electrode Active Material

Pure Si powder (average particle diameter (D50): 5.0 $\mu$m) as a silicon-based active material and $Al(OH)_3$ (average particle diameter (D50): 700 nm) as an inorganic flame retardant were prepared. The silicon-based active material and the inorganic flame retardant were mixed in a weight ratio of 90:10, and then an inorganic flame retardant coating layer was formed on the surface of the silicon-based active material by using a dry ball mill method, resulting in preparation of a negative electrode active material (average thickness of the coating layer: 1.5 $\mu$m).

2) Preparation of Negative Electrode

The negative electrode active material prepared in the above 1), SWCNTs (single-walled carbon nanotubes) as a conductive material, and polyacrylamide (PAM) as a binder were prepared in a weight ratio of 90:0.8:9.2 to prepare a negative electrode composition, and the mixture was added to distilled water as a solvent, resulting in preparation of a negative electrode slurry (solid content 26 wt%).

Specifically, SWCNTs and PAM were dispersed in distilled water using a homomixer at 2,500 rpm for 30 minutes, then the negative electrode active material was added, and the mixture was dispersed at 2,500 rpm for 30 minutes to prepare a negative electrode slurry.

The SWCNTs used had a BET specific surface area of 1000 $m^2/g$ to 1500 $m^2/g$, and an aspect ratio of 10,000 or more, and a solution in which the SWCNTs were dispersed in CMC (carboxymethyl cellulose) was used.

The PAM used was in an aqueous form, with a weight average molecular weight (Mw) of 500,000 g/mol to 800,000 g/mol, a number average molecular weight (Mn) of 100,000 g/mol to 400,000 g/mol, and a PDI value of 20 to 50. The binder was in the aqueous form, and the weight-average molecular weight and the number-average molecular weight thereof were measured using aqueous GPC (gel permeation chromatography).

The negative electrode slurry was coated on both surfaces of a copper current collector (thickness: 26 $\mu$m) serving as a negative electrode current collector layer, in a loading amount of 87.7 mg/25 $cm^2$, which was then roll-pressed and dried in a vacuum oven at 130°C for 10 hours to form a negative electrode active material layer (thickness: 33 $\mu$m), resulting in preparation of a negative electrode (thickness of the negative electrode: 59 $\mu$m, porosity: 55.0%).

3) Preparation of Secondary Battery

$LiNi_{0.6}Co_{0.2}Mn_{0.2}O_2$ (average particle diameter (D50): 15 $\mu$m) as a positive electrode active material, carbon black (product name: Super C65, manufacturer: Timcal) as a conductive material, and polyvinylidene fluoride (PVdF) as a binder were prepared at a weight ratio of 97:1.5:1.5 and added to N-methyl-2-pyrrolidone (NMP) as a solvent for formation of a positive electrode slurry, resulting in preparation of a positive electrode slurry (solid concentration: 78 wt%).

The positive electrode slurry was coated onto both surfaces of an aluminum current collector (thickness: 12 $\mu$m) serving as a positive electrode current collector, in a loading amount of 537 mg/25 $cm^2$, which was then roll-pressed and dried in a vacuum oven at 130°C for 10 hours to form a positive electrode active material layer (thickness: 65 $\mu$m), resulting in preparation of a positive electrode (thickness of the positive electrode: 77 $\mu$m, porosity: 26%).

A lithium secondary battery was prepared by interposing a polyethylene separator between the positive electrode and the negative electrode and injecting an electrolyte.

The electrolyte used was prepared by adding 3 wt% of vinylene carbonate (VC), based on the total weight of the electrolyte, to an organic solvent obtained by mixing fluoroethylene carbonate (FEC) and diethyl carbonate (DEC) at a volume ratio of 10:90, and by adding $LiPF_6$ as a lithium salt at a concentration of 1 M.

**Example 2**

A secondary battery was prepared in the same manner as in Example 1, except that, when preparing the negative electrode active material in the above 1) of the preparation method of Example 1, the silicon-based active material was prepared in the following manner.

SiO particles were prepared as silicon-based particles. The SiO particles and Mg as a metal-containing material were mixed, and the mixture was heat treated at 1,200°C for 3 hours to prepare SiO particles with Mg distributed on the surfaces and/or in the inside of the SiO particles. During the preparation, a carbon layer was formed on the SiO particles with Mg distributed on the surfaces and/or in the inside of the SiO particles at 950°C by chemical vapor deposition (CVD) in which methane was used as a hydrocarbon gas, resulting in preparation of a silicon-based active material (average particle diameter (D50): 6 $\mu$m). In the silicon-based active material, the weight ratio of silicon-based particles: metal (Mg): carbon layer was 85:10:5 (average thickness of the coating layer: 1.5 $\mu$m).

That is, Example 2 was prepared using Mg-doped SiO instead of Si powder as a silicon-based active material, compared to Example 1.

**Example 3**

A secondary battery (average thickness of the coating layer: 0.2 $\mu$m) was prepared in the same manner as in Example 1, except that, when preparing the negative electrode active material in the above 1) of the preparation method of Example 1, $Al(OH)_3$ (average particle diameter (D50): 100 nm) was used as an inorganic flame retardant.

That is, Example 3 was prepared using an inorganic flame retardant having a different average particle diameter compared to Example 1.

**Example 4**

A secondary battery (average thickness of the coating layer: 3 $\mu$m) was prepared in the same manner as in Example 1, except that, when preparing the negative electrode active material in the above 1) of the preparation method of Example 1, Mg(OH)$_2$ (average particle diameter (D50): 900 nm) was used as an inorganic flame retardant.

That is, Example 4 was prepared using Mg(OH)$_2$, instead of Al(OH)$_3$, as an inorganic flame retardant having a different average particle diameter compared to Example 1.

**Example 5**

A secondary battery was prepared in the same manner as in Example 1, except that the negative electrode composition was prepared in the following manner in the above 2) of the preparation method of Example 1.

A negative electrode composition was prepared by preparing a negative electrode active material including the negative electrode active material prepared in Example 1 (15 parts by weight based on total 100 parts by weight of the first and second negative electrode active materials) as the first negative electrode active material, and graphite (artificial graphite: natural graphite = 70:30 weight ratio, 85 parts by weight based on total 100 parts by weight of the first and second negative electrode active materials), which is a carbon-based active material, as the second negative electrode active material, SWCNTs (single-walled carbon nanotubes) as a conductive material, and polyacrylamide (PAM) as a binder in a weight ratio of 90:0.8:9.2.

That is, Example 5 was prepared using a negative electrode composition in which a carbon-based active material was mixed.

**Example 6**

A secondary battery was prepared in the same manner as in Example 1, except that Si/C particles (average particle diameter (D50): 7.0 $\mu$m) were used as the silicon-based active material in the preparation method of Example 1.

That is, Example 6 was prepared using Si/C particles instead of Si powder as a silicon-based active material, compared to Example 1.

**Example 7**

A secondary battery was prepared in the same manner as in Example 1, except that, when preparing the negative electrode active material in Example 1, the average thickness of the inorganic flame retardant coating layer was 20 nm.

**Example 8**

A secondary battery was prepared in the same manner as in Example 2, except that, when preparing the negative electrode active material in Example 2, the average thickness of the inorganic flame retardant coating layer was 20 nm.

**Comparative Example 1**

A secondary battery was prepared in the same manner as in Example 1, except that, when preparing a negative electrode in the above 2) of the preparation method of Example 1, pure Si powder (average particle diameter (D50): 5.0 $\mu$m) was used as the negative electrode active material instead of the negative electrode active material prepared in the above 1).

That is, Comparative Example 1 was prepared using a negative electrode active material that did not include an inorganic flame retardant coating layer.

**Comparative Example 2**

A secondary battery was prepared in the same manner as in Example 1, except that, when preparing a negative electrode in the above 2) of the preparation method of Example 1, pure Si (average particle diameter (D50): 5.0 $\mu$m), instead of the negative electrode active material prepared in the above 1), was used as a negative electrode active material, and the negative electrode slurry further included Al(OH)$_3$ (average particle diameter (D50): 700 nm) as an inorganic flame retardant.

That is, Comparative Example 2 was prepared using a negative electrode in which the negative electrode active material did not include a coating layer and the inorganic flame retardant was evenly dispersed and distributed on the negative electrode active material layer.

**Comparative Example 3**

A secondary battery (average thickness of the coating layer: 3 μm) was prepared in the same manner as in Example 1, except that, when preparing the negative electrode active material in the above 1) of the preparation method of Example 1, a halogen-based flame retardant (average particle diameter (D50): 100 nm) was used.
That is, Comparative Example 3 was prepared using a halogen-based flame retardant instead of an inorganic flame retardant.

**Comparative Example 4**

A secondary battery was prepared in the same manner as in Example 6, except that a negative electrode active material was used that did not include an inorganic flame retardant coating layer on the surface of the silicon-based active material in the preparation method of Example 6.
That is, Comparative Example 4 was prepared using only Si/C particles not including a coating layer as a negative electrode active material.

**Comparative Example 5**

A secondary battery was prepared in the same manner as in Example 1, except that, when preparing the negative electrode active material in Example 1, the average thickness of the inorganic flame retardant coating layer was 5 nm.

**Comparative Example 6**

A secondary battery was prepared in the same manner as in Example 1, except that, when preparing the negative electrode active material in Example 1, the average thickness of the inorganic flame retardant coating layer was 15 nm.

**Comparative Example 7**

A secondary battery was prepared in the same manner as in Example 2, except that, when preparing the negative electrode active material in Example 2, the average thickness of the inorganic flame retardant coating layer was 5 nm.

**Comparative Example 8**

A secondary battery was prepared in the same manner as in Example 2, except that, when preparing the negative electrode active material in Example 2, the average thickness of the inorganic flame retardant coating layer was 15 nm.
The following items were evaluated for the prepared examples and comparative examples, and the results are shown in Table 1.

**<Experimental Example: Capacity Retention Rate Evaluation>**

The lithium secondary battery was subjected to an in-situ cycle test at 4.2-3.0V with charging/discharging conditions of 1C/0.5C, and during the test, charging and discharging were performed at 0.33C/0.33C (4.2-3.0 V) every 50 cycles. Through this process, the capacity retention rate was measured after 200 cycles.
Capacity retention rate (%) = {(discharge capacity at the Nth cycle)/(discharge capacity at the first cycle)} x 100 %

**<Experimental Example: Resistance Increase Rate Evaluation>**

In the capacity retention rate evaluation, the capacity retention rate was measured by performing charging and discharging at 0.33C/0.33C (4.2-3.0V) every 50 cycles during the test, and after 200 cycles, the resistance was measured by performing discharging at 2.5C pulse at 50% SOC, and the resistance increase rate was comparatively analyzed.
For the resistance increase rate evaluation, the data at 200 cycles was calculated, respectively.

**<Experimental Example: Maximum Temperature Evaluation During Ignition>**

The maximum temperature during ignition was measured for the secondary batteries prepared as described above.
In the prepared secondary battery, the temperature of the charged cell was gradually increased using a heat pad to induce ignition of the cell. In this case, the surface temperature of the negative electrode was measured, and the maximum temperature measured is shown in Table 1.

[Table 1]

| | Capacity retention rate (%) after 200 cycles | Resistance increase rate (%) after 200 cycles (3.0-4.2V, 1C/0.5C) | Maximum temperature (°C) during cell ignition |
|---|---|---|---|
| Example 1 | 85 | 7 | 532 |
| Example 2 | 87 | 6 | 502 |
| Example 3 | 85 | 6 | 545 |
| Example 4 | 84 | 8 | 581 |
| Example 5 | 89 | 9 | 449 |
| Example 6 | 88 | 7 | 490 |
| Example 7 | 85 | 7 | 555 |
| Example 8 | 87 | 6 | 526 |
| Comparative Example 1 | 85 | 8 | 679 |
| Comparative Example 2 | 85 | 7 | 610 |
| Comparative Example 3 | 86 | 7 | 635 |
| Comparative Example 4 | 87 | 6 | 603 |
| Comparative Example 5 | 85 | 7 | 620 |
| Comparative Example 6 | 85 | 7 | 611 |
| Comparative Example 7 | 87 | 6 | 588 |
| Comparative Example 8 | 87 | 6 | 580 |

Referring to Table 1, in Examples 1 to 8 including the negative electrode active material including the inorganic flame retardant coating layer on the surface of the silicon-based active material, it was confirmed that the maximum temperature during ignition was lower than that of Comparative Example 1 not including an inorganic flame retardant coating layer on the surface of the silicon-based active material. This is understood to be because ignition is suppressed by the endothermic reaction that occurs when the inorganic flame retardant decomposes at a specific temperature or higher as the cell temperature increases, and an additional ignition suppression effect is provided by the latent heat of water generated by the decomposition reaction of the inorganic flame retardant. In addition, in Examples 1 to 8 including the negative electrode active material including the inorganic flame retardant coating layer on the surface of the silicon-based active material, the maximum temperature during cell ignition is lower, while the capacity retention rate and the resistance increase rate are equivalent to or improved compared to Comparative Example 1. Therefore, it was confirmed that the inorganic flame retardant coating layer on the surface of the silicon-based active material can delay ignition within the cell and improve thermal safety of the cell without the inorganic flame retardant coating layer lowering the performance of the cell.

On the other hand, in Comparative Example 2, the maximum temperature during ignition was lower than that of Comparative Example 1, but it was confirmed that the maximum temperature during ignition was higher than those of Examples 1 to 8. This is understood to be due to the method of applying the inorganic flame retardant, since when the inorganic flame retardant is evenly dispersed throughout the entire electrode (Comparative Example 2), the heat generation generated on the surface of the silicon-based active material cannot be effectively suppressed.

Furthermore, in Example 6 including the negative electrode active material including an inorganic flame retardant coating layer on the surface of the silicon-based active material, it was confirmed that the maximum temperature during cell ignition was lower than that of Comparative Example 4 relating to a negative electrode active material using the same type of silicon-based active material.

In addition, in Examples 7 and 8 in which a 20 nm thick inorganic flame retardant coating layer was applied to each of pure Si and $SiO_x$, it was confirmed that an excellent effect of improving thermal stability was exhibited compared to Comparative Examples 5 to 8 in which relatively thinner 5 nm and 15 nm thick inorganic flame retardant coating layers were applied. That is, it was confirmed that when the average thickness of the inorganic flame retardant coating layer was 20 nm or more, for example, 0.02 μm or more, the heat resistance effect was excellent. On the other hand, when the average thickness of the inorganic flame retardant coating layer was less than 20 nm, for example, less than 0.02 $\mu$m, it was confirmed that the maximum temperature during cell ignition was higher due to the inorganic flame retardant coating layer having a smaller thickness than the Examples.

In Comparative Example 3 (using a halogen-based flame retardant), since decomposition occurs at a relatively lower temperature than the inorganic flame retardants of Examples 1 to 8, structural changes of the coating layer may occur, and it was confirmed that, in an actual thermal runaway situation of a cell, the effect of improving thermal stability is reduced, resulting in an inferior effect compared to the Examples.

The foregoing detailed description is intended to illustrate and explain the present invention. In addition, the above-described descriptions merely show and explain the preferred exemplary embodiment of the present invention, and as mentioned above, the present invention can be used in various other combinations, changes, and environments, and the changes or modifications can be made within the scope of the invention disclosed in the present specification, the scope equivalent to the above-described disclosure, and/or the scope of technology or knowledge in the art. Accordingly, the foregoing detailed description of the invention is not intended to limit the invention to the disclosed embodiments. Also, the appended claims should be construed to include other embodiments as well.

**Claims**

1. A negative electrode active material comprising:

   a silicon-based active material; and
   a coating layer provided on the silicon-based active material, wherein
   the silicon-based active material comprises one or more selected from the group consisting of Si, $SiO_x$ ($0 < x < 2$), and Si/C, and
   the coating layer comprises an inorganic flame retardant.

2. The negative electrode active material of claim 1, wherein the inorganic flame retardant undergoes an endothermic reaction at 100°C to 250°C.

3. The negative electrode active material of claim 2, wherein the endothermic reaction is a dehydration reaction.

4. The negative electrode active material of claim 1, wherein the inorganic flame retardant comprises one or more selected from the group consisting of aluminum hydroxide ($Al(OH)_3$), magnesium hydroxide ($Mg(OH)_2$), antimony trioxide ($Sb_2O_3$), and zinc borate.

5. The negative electrode active material of claim 1, wherein the silicon-based active material comprises Si, and the Si is included in an amount of 70 to 100 parts by weight based on 100 parts by weight of the silicon-based active material.

6. The negative electrode active material of claim 1, wherein the $SiO_x$ ($0 < x < 2$) further comprises a metal distributed on a surface, in an inside, or both on the surface and in the inside of the $SiO_x$ ($0 < x < 2$), and the metal comprises one or more selected from the group consisting of Li, Mg, and Al.

7. The negative electrode active material of claim 1, wherein an average thickness of the coating layer is 0.02 $\mu$m to 10 $\mu$m.

8. The negative electrode active material of claim 1, wherein the inorganic flame retardant is included in an amount of 95 parts by weight or more based on 100 parts by weight of the coating layer.

9. The negative electrode active material of claim 1, wherein an average particle diameter (D50) of the inorganic flame retardant is 0.05 $\mu$m to 1.5 $\mu$m.

10. A negative electrode composition comprising:

    the negative electrode active material of any one of claims 1 to 9;
    a negative electrode binder; and
    a negative electrode conductive material.

11. The negative electrode composition of claim 10, wherein the negative electrode active material is a first negative electrode active material, and further comprises a carbon-based active material as a second negative electrode active material.

12. The negative electrode composition of claim 11, wherein the carbon-based active material comprises at least one selected from the group consisting of natural graphite and artificial graphite.

13. The negative electrode composition of claim 11, wherein the first negative electrode active material is included in an amount of 1 to 20 parts by weight based on total 100 parts by weight of the first and second negative electrode active materials.

14. A negative electrode comprising:

a negative electrode current collector layer; and
a negative electrode active material layer formed on one surface or both surfaces of the negative electrode current collector layer,
wherein the negative electrode active material layer comprises the negative electrode composition of claim 10.

15. A secondary battery comprising:

a positive electrode;
the negative electrode of claim 14;
a separator provided between the positive electrode and the negative electrode; and
an electrolyte.

16. A battery module comprising the secondary battery of claim 15.

17. A battery pack comprising the secondary battery of claim 15.

18. A battery pack comprising the battery module of claim 16.

## INTERNATIONAL SEARCH REPORT

| International application No. |
| --- |
| **PCT/KR2025/012952** |

### A. CLASSIFICATION OF SUBJECT MATTER

**H01M 4/36**(2006.01)i; **H01M 4/38**(2006.01)i; **H01M 4/62**(2006.01)i; **H01M 4/48**(2010.01)i; **H01M 4/587**(2010.01)i; **H01M 4/133**(2010.01)i; **H01M 4/134**(2010.01)i; **H01M 10/0525**(2010.01)i; **H01M 50/204**(2021.01)i

According to International Patent Classification (IPC) or to both national classification and IPC

### B. FIELDS SEARCHED

Minimum documentation searched (classification system followed by classification symbols)

H01M 4/36(2006.01); C01F 7/02(2006.01); H01M 10/052(2010.01); H01M 4/131(2010.01); H01M 4/134(2010.01); H01M 4/139(2010.01); H01M 4/38(2006.01); H01M 4/48(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 음극 활물질(negative electrode active material), 실리콘 화합물(silicone compound), 코팅층(coating layer), 무기 난연제(inorganic flame retardant), 이차 전지(secondary battery)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2018-0019569 A (SHIN-ETSU CHEMICAL CO., LTD.) 26 February 2018 (2018-02-26)<br>claim 1; paragraphs [0039], [0047], [0048], [0050], [0056], [0057], [0075], [0077]-[0080], [0084], [0095], [0096], [0098], [0100], [0117], [0136] | 1-18 |
| X | KR 10-2023-0042447 A (SK ON CO., LTD.) 28 March 2023 (2023-03-28)<br>claims 1-6, 10; paragraphs [0053]-[0055], [0058], [0060]-[0062], [0064], [0069], [0081], [0092] | 1-5,7-18 |
| A | US 2020-0212427 A1 (NINGDE AMPEREX TECHNOLOGY LIMITED) 02 July 2020 (2020-07-02)<br>claims 1-3, 5, 8; paragraphs [0092]-[0094], [0102] | 1-18 |
| A | JP 2009-164104 A (CANON INC.) 23 July 2009 (2009-07-23)<br>claims 1-25 | 1-18 |
| A | KR 10-2024-0031926 A (LG ENERGY SOLUTION, LTD.) 08 March 2024 (2024-03-08)<br>claims 1-16 | 1-18 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 December 2025** | **09 December 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2025/012952**

| Patent document cited in search report | | | Publication date (day/month/year) | Patent family member(s) | | | Publication date (day/month/year) |
|---|---|---|---|---|---|---|---|
| KR | 10-2018-0019569 | A | 26 February 2018 | CN | 107710466 | A | 16 February 2018 |
| | | | | CN | 107710466 | B | 03 November 2020 |
| | | | | EP | 3312916 | A1 | 25 April 2018 |
| | | | | EP | 3312916 | B1 | 20 March 2024 |
| | | | | JP | 2017-010645 | A | 12 January 2017 |
| | | | | JP | 6407804 | B2 | 17 October 2018 |
| | | | | KR | 10-2633418 | B1 | 06 February 2024 |
| | | | | TW | 201717457 | A | 16 May 2017 |
| | | | | TW | I709273 | B | 01 November 2020 |
| | | | | US | 10418627 | B2 | 17 September 2019 |
| | | | | US | 2018-0175377 | A1 | 21 June 2018 |
| | | | | WO | 2016-203696 | A1 | 22 December 2016 |
| KR | 10-2023-0042447 | A | 28 March 2023 | CN | 114975903 | A | 30 August 2022 |
| | | | | CN | 114975903 | B | 22 July 2025 |
| | | | | DE | 102021127843 | A1 | 18 August 2022 |
| | | | | DE | 102021127843 | B4 | 25 July 2024 |
| | | | | KR | 10-2022-0118070 | A | 25 August 2022 |
| | | | | KR | 10-2511822 | B1 | 17 March 2023 |
| | | | | KR | 10-2521407 | B1 | 12 April 2023 |
| | | | | US | 11791458 | B2 | 17 October 2023 |
| | | | | US | 2022-0263071 | A1 | 18 August 2022 |
| | | | | US | 2023-0420657 | A1 | 28 December 2023 |
| US | 2020-0212427 | A1 | 02 July 2020 | CN | 111403693 | A | 10 July 2020 |
| | | | | CN | 111403693 | B | 13 August 2021 |
| | | | | CN | 113471442 | A | 01 October 2021 |
| | | | | CN | 113471442 | B | 02 August 2022 |
| | | | | EP | 3678229 | A1 | 08 July 2020 |
| | | | | EP | 3678229 | B1 | 26 June 2024 |
| | | | | ES | 2986951 | T3 | 13 November 2024 |
| | | | | JP | 2022-504057 | A | 13 January 2022 |
| | | | | JP | 7367008 | B2 | 23 October 2023 |
| | | | | US | 11145852 | B2 | 12 October 2021 |
| | | | | WO | 2020-140685 | A1 | 09 July 2020 |
| JP | 2009-164104 | A | 23 July 2009 | CN | 101849306 | A | 29 September 2010 |
| | | | | CN | 101849306 | B | 12 June 2013 |
| | | | | EP | 2204867 | A1 | 07 July 2010 |
| | | | | KR | 10-1252904 | B1 | 09 April 2013 |
| | | | | KR | 10-2010-0063747 | A | 11 June 2010 |
| | | | | TW | 200929664 | A | 01 July 2009 |
| | | | | TW | I387150 | B | 21 February 2013 |
| | | | | US | 2009-0162750 | A1 | 25 June 2009 |
| | | | | US | 2012-0321949 | A1 | 20 December 2012 |
| | | | | US | 8715855 | B2 | 06 May 2014 |
| | | | | WO | 2009-031715 | A1 | 12 March 2009 |
| KR | 10-2024-0031926 | A | 08 March 2024 | CN | 119343784 | A | 21 January 2025 |
| | | | | EP | 4525080 | A1 | 19 March 2025 |
| | | | | JP | 2025-518856 | A | 19 June 2025 |
| | | | | WO | 2024-049239 | A1 | 07 March 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240114080

- KR 1020250118041